(19) Europäisches Patentamt / European Patent Office / Office européen des brevets

(11) **EP 2 700 154 B1**

(12) **EUROPÄISCHE PATENTSCHRIFT**

(45) Veröffentlichungstag und Bekanntmachung des Hinweises auf die Patenterteilung:
**16.12.2015 Patentblatt 2015/51**

(21) Anmeldenummer: **12715391.4**

(22) Anmeldetag: **19.04.2012**

(51) Int Cl.:
*H02M 5/27* (2006.01)    *H02M 5/297* (2006.01)
*H02M 7/483* (2007.01)

(86) Internationale Anmeldenummer:
**PCT/EP2012/057171**

(87) Internationale Veröffentlichungsnummer:
**WO 2012/143449 (26.10.2012 Gazette 2012/43)**

(54) **MATRIX-UMRICHTER UND VERFAHREN ZUM ERZEUGEN EINER WECHSELSPANNUNG IN EINEM ZWEITEN WECHSELSPANNUNGSNETZ AUS EINER WECHSELSPANNUNG IN EINEM ERSTEN WECHSELSPANNUNGSNETZ MITTELS EINES MATRIX-UMRICHTERS**

MATRIX INVERTER AND METHOD FOR GENERATING AN A.C. VOLTAGE IN A SECOND A.C. VOLTAGE NETWORK FROM AN A.C. VOLTAGE IN A FIRST A.C. VOLTAGE NETWORK BY MEANS OF A MATRIX INVERTER

CONVERTISSEURS DE MATRICES ET PROCÉDÉ POUR PRODUIRE UNE TENSION ALTERNATIVE DANS UN SECOND RÉSEAU DE TENSION ALTERNATIVE À PARTIR D'UNE PREMIÈRE TENSION ALTERNATIVE DANS UN PREMIER RÉSEAU DE TENSION ALTERNATIVE AU MOYEN D'UN CONVERTISSEUR DE MATRICES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.04.2011 DE 102011007696**

(43) Veröffentlichungstag der Anmeldung:
**26.02.2014 Patentblatt 2014/09**

(73) Patentinhaber: **Siemens Aktiengesellschaft**
**80333 München (DE)**

(72) Erfinder:
• **DAVIES, Mark**
  **Howrah, TAS 7018 (AU)**
• **DOMMASCHK, Mike**
  **91096 Möhrendorf (DE)**
• **LANG, Jörg**
  **95346 Stadtsteinach (DE)**
• **WÜRFLINGER, Klaus**
  **90419 Nürnberg (DE)**

(56) Entgegenhaltungen:
**EP-A1- 2 051 361     WO-A1-2011/021485**
**US-A- 5 909 367     US-A- 6 008 633**
**US-B2- 6 900 998**

EP 2 700 154 B1

**Beschreibung**

Die Erfindung betrifft einen Matrix-Umrichter, der einerseits mit einem ersten mehrphasigen Wechselspannungsnetz und andererseits mit einem zweiten mehrphasigen Wechselspannungsnetz verbunden ist, mit jeweils mit dem ersten Wechselspannungsnetz verbundenen, ersten induktiven Schaltungselementen und jeweils mit dem zweiten Wechselspannungsnetz verbundenen, zweiten induktiven Schaltungselementen, mit einer Schaltmatrix, die die von dem ersten Wechselspannungsnetz abgewandten Enden der ersten induktiven Schaltungselemente mit den von dem zweiten Wechselspannungsnetz abgewandten Enden der zweiten induktiven Schaltungselemente verbindet, wobei die Schaltmatrix aus steuerbaren Umrichtereinheiten besteht, und mit einer mit Steuereingängen der steuerbaren Umrichtereinheiten verbundenen Regelanordnung, wobei die Regelanordnung mit Strom- und Spannungsmessgrößen des ersten und des zweiten Wechselspannungsnetzes beaufschlagt ist.

Ein derartiger Matrix-Umrichter ist in der US-Patentschrift 6,900,998 B2 beschrieben. Bei diesem bekannten Matrix-Umrichter sind die jeweils von dem ersten mehrphasigen Wechselspannungsnetz abgewandten Enden der ersten induktiven Schaltungselemente über jeweils eine Umrichtereinheit in Form eines Multilevel-Schaltbausteins mit allen von den zweiten Anschlüssen abgewandten Enden der zweiten induktiven Schaltungselemente verbunden, wozu bei dreiphasigen Wechselspannungsnetzen insgesamt neun Umrichtereinheiten erforderlich sind. Die Regelanordnung des bekannten Matrix-Umrichters ist mit Strom- und Spannungsmessgrößen des ersten und des zweiten Wechselspannungsnetzes beaufschlagt und so ausgelegt, dass der Matrix-Umrichter unter Verwendung einer Raumvektor-Modulation gesteuert wird.

Der Erfindung liegt die Aufgabe zugrunde, einen Matrix-Umrichter vorzuschlagen, der nicht nur vergleichsweise einfach aufgebaut ist, sondern der auch relativ einfach steuerbar ist, um zwei Wechselspannungsnetze unterschiedlichen Spannungsniveaus und/oder unterschiedlicher Frequenz miteinander zu verbinden.

Zur Lösung dieser Aufgabe ist bei einem Matrix-Umrichter der eingangs angegebenen Art erfindungsgemäß zwischen den von dem ersten Wechselspannungsnetz abgewandten Enden der ersten induktiven Schaltungselemente und Erdpotential jeweils eine erste Umrichtereinheit in einer Ausführung als steuerbare Wechselspannungsquelle angeordnet, zwischen die von dem ersten Wechselspannungsnetz abgewandten Enden der ersten induktiven Schaltungselemente und die von dem zweiten Wechselspannungsnetz abgewandten Enden der zweiten induktiven Schaltungselemente ist jeweils eine zweite Umrichtereinheit in einer Ausführung als steuerbare Wechselspannungsquelle geschaltet; die Regelanordnung ist mit Steuereingängen der ersten und der zweiten Umrichtereinheiten derart verbunden, dass die dem Matrix-Umrichter zufließende elektrische Leistung gleich der aus dem Matrix-Umrichter abfließenden elektrischen Leistung ist.

Ein wesentlicher Vorteil des erfindungsgemäßen Matrix-Umrichters besteht darin, dass er vergleichsweise einfach aufgebaut ist, indem er bei dreiphasigen Wechselspannungsnetzen mit nur drei ersten Umrichtereinheiten und nur drei zweiten Umrichtereinheiten auskommt, also insgesamt nur sechs Umrichtereinheiten benötigt. Ein weiterer wesentlicher Vorteil besteht darin, dass die Regelanordnung vergleichsweise einfach ausgeführt werden kann, weil mit ihr der Matrix-Umrichter nur so gesteuert zu werden braucht, dass die dem Matrix-Umrichter zufließende elektrische Leistung gleich der aus dem Matrix-Umrichter abfließenden elektrischen Leistung ist, ausgehend von der Spannung am ersten Wechselspannungsnetz die Spannung am zweiten Wechselspannungsnetz beliebig entsprechend gewünschten Vorgaben bezüglich Höhe und/oder Frequenz einstellen zu können.

Bei dem erfindungsgemäßen Matrix-Umrichter können steuerbare Umrichtereinheiten unterschiedlicher Ausführung eingesetzt werden, sofern sie dazu geeignet sind, bei entsprechender Ansteuerung steuerbare Wechselspannungsquellen zu bilden.

Besonders geeignet als steuerbare Umrichtereinheiten sind bei dem erfindungsgemäßen Matrix-Umrichter Multilevel-Umrichtereinheiten. Diese können beispielsweise aus Halbbrücken-Submodulen bestehen. Als besonders vorteilhaft wird es aber angesehen, wenn die modularen Multilevel-Umrichtereinheiten aus H-Brücken-Submodule bestehen, weil hierdurch die Abschaltmöglichkeit des Stromes gewährleistet wird und höhere Modulationsgrade möglich werden.

Besonders vorteilhaft ist es, wenn die Kondensatoren der H-Brücken-Submodule Speicherkondensatoren mit höchster Kapazität im Faradbereich sind, die auch als SuperCaps bezeichnet werden. Alternativ dazu können den Kondensatoren üblicher Ausführung in den H-Brücken-Submodulen Energiespeicher, wie Batterien, parallel geschaltet sein. Andererseits können Energiespeicher per Steller an den Zwischenkreiskondensator angeschlossen werden.

Auch die induktiven Schaltungselemente können bei dem erfindungsgemäßen Matrix-Umrichter in unterschiedlicher Weise ausgestaltet sein. Als besonders vorteilhaft wird es angesehen, wenn die induktiven Schaltungselemente Drosseln sind, weil sich diese vergleichsweise einfach herstellen lassen und somit kostengünstig sind.

Gegebenenfalls kann es aber auch vorteilhaft sein, wenn die induktiven Schaltungselemente Transformatoren sind, weil sich damit das Übersetzungsverhältnis des gesamten Matrix-Umrichters optimieren lässt; außerdem lassen sich damit besondere Isolationsanforderungen erfüllen.

Der Erfindung liegt ferner die Aufgabe zugrunde, ein Verfahren zum Erzeugen einer Wechselspannung in einem zweiten mehrphasigen Wechselspannungsnetz (N2) aus einer mehrphasigen Wechselspannung in einem ersten Wechselspannungsnetz mittels eines Matrix-Umrichters, der eine Verbindung zu dem ersten Wechselspannungsnetz und dem zweiten Wechselspannungsnetz aufweist, jeweils mit dem ersten Wechselspannungsnetz verbundene, erste induktive Schaltungselemente und jeweils mit dem zweiten Wechselspannungsnetz verbundene, zweite induktive Schaltungselemente, eine Schaltmatrix, die die von dem ersten Wechselspannungsnetz abgewandten Enden der ersten induktiven Schaltungselemente mit den von dem zweiten Wechselspannungsnetz abgewandten Enden der zweiten induktiven Schaltungselemente verbindet, wobei die Schaltmatrix aus steuerbaren Umrichtereinheiten besteht, und eine mit Steuereingängen der steuerbaren Umrichtereinheiten verbundene Regelanordnung, wobei die Regelanordnung mit Strom- und Spannungsmessgrößen des ersten und des zweiten Wechselspannungsnetzes beaufschlagt ist.

Ein solches Verfahren ist der oben bereits erwähnten US-Patentschrift 6,900,998 B2 zu entnehmen. Davon ausgehend wird erfindungsgemäß vorgesehen, dass bei einem Matrix-Umrichter mit mit jeweils einer zwischen den von den ersten Wechselspannungsnetz abgewandten Enden der ersten induktiven Schaltungselemente und Erdpotential angeordneten ersten Umrichtereinheit in einer Ausführung als steuerbare Wechselspannungsquelle und jeweils einer zwischen die von dem ersten Wechselspannungsnetz abgewandten Enden der ersten induktiven Schaltungselemente und die von dem zweiten Wechselspannungsnetz abgewandten Enden der zweiten induktiven Schaltungselemente angeschlossenen zweiten Umrichtereinheit in einer Ausführung als steuerbare Wechselspannungsquelle die Umrichtereinheiten mittels der Regelanordnung derart gesteuert werden, dass die dem Matrix-Umrichter zufließende elektrische Leistung gleich der aus dem Matrix-Umrichter abfließenden elektrischen Leistung ist.

Mit diesem Verfahren lassen sich die Vorteile erzielen, die oben bereits im Zusammenhang mit dem erfindungsgemäßen Umrichter aufgeführt worden sind.

Vorteilhafte Ausgestaltungen des erfindungsgemäßen Verfahrens ergeben sich aus den Patentansprüchen 7 bis 10.

Zur weiteren Erläuterung der Erfindung ist in

Figur 1    ein Ausführungsbeispiel des erfindungsgemäßen Matrix-Umrichters mit Drosseln als induktive Schaltungselemente und in

Figur 2    eine prinzipielle Darstellung des erfindungsgemäßen Matrix-Umrichters für eine einzige Phase zur näheren Erläuterung seiner Funktionsweise dargestellt.

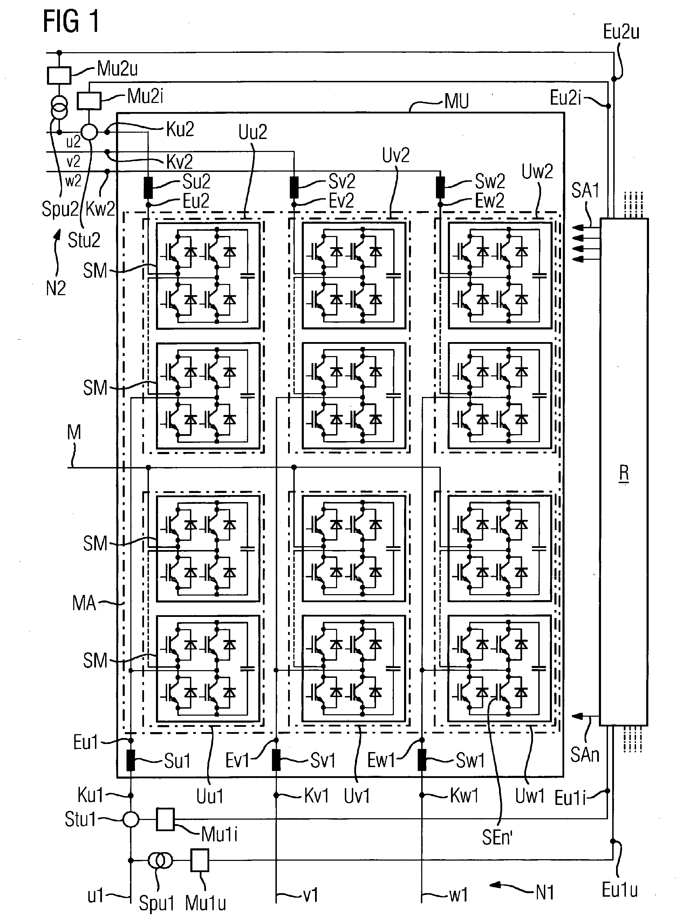

In der Figur 1 ist ein Matrix-Umrichter MU dargestellt, der mit einem ersten mehrphasigen Wechselspannungsnetz N1 mit den Phasenleitern u1, v1 und w1 verbunden ist. Andererseits ist der Matrix-Umrichter MU auch mit den Phasenleitern u2, v2 und w2 eines zweiten mehrphasigen Wechselspannungsnetzes N2 verbunden.

Der Matrix-Umrichter MU ist an ersten Anschlüssen Ku1, Kv1 und Kw1 an die Phasenleiter u1, v1 und w1 des ersten Wechselspannungsnetzes N1 angeschlossen. Mit diesen ersten Anschlüssen Ku1, Kv1 und Kw1 sind erste induktive Schaltungselemente Su1, Sv1 und Sw1 mit ihrem jeweils einen Ende verbunden. Die von den ersten Anschlüssen Ku1, Kv1 und Kw1 und damit vom ersten Wechselspannungsnetz N1 abgewandten Enden Eu1 und Ev1 sowie Ew1 der induktiven Schaltungselemente Su1, Sv1 und Sw1 sind mit jeweils einer ersten Umrichtereinheit Uu1, Uv1 und Uw1 einer Schaltmatrix MA verbunden. Ausgangsseitig sind diese ersten Umrichtereinheiten Uu1, Uv1 und Uw1 gemeinsam an Erdpotential M angeschlossen.

Wie die Figur 1 ferner zeigt, sind die Enden Eu1, Ev1 und Ew1 der ersten induktiven Schaltungselemente Su1, Sv1 und Sw1 auch mit zweiten Umrichtereinheiten Uu2, Uv2 und Uw2 verbunden, die ihrerseits ausgangsseitig an von dem zweiten Wechselspannungsnetz N2 abgewandte Enden Eu2, Ev2 und Ew2 von zweiten induktiven Schaltungselementen Su2, Sv2 und Sw2 angeschlossen sind. Diese Schaltungselemente Su2, Sv2 und Sw2 sind über zweite Anschlüsse Ku2, Kv2 und Kw2 an das zweite Wechselspannungsnetz N2 angeschlossen.

Die Figur 1 lässt ferner erkennen, dass jeder der Umrichtereinheiten Uu1, Uv1 und Uw1 beziehungsweise Uu2, Uv2 und Uw2 als modulare Multilevel-Umrichter mit jeweils einer Anzahl n von Submodulen SM ausgeführt ist, wie es an sich bekannt ist. Die Submodule SM sind als sogenannte H-Brückenschaltung ausgestaltet, was ebenfalls bekannt ist und deshalb hier im Einzelnen nicht beschrieben zu werden braucht. Die Steueranschlüsse dieser Submodule SM sind hier auch nur angedeutet.

Die Anzahl der Submodule SM in den ersten und den zweiten Umrichtereinheiten Uu1, Uv1 und Uw1 beziehungsweise Uu2, Uv2 und Uw2 ist im Hinblick auf die gewünschte Spannungsamplitude im zweiten Wechselspannungsnetz N2 gewählt, wenn das erste Wechselspannungsnetz N1 das speisende Netz ist.

Der Figur 1 ist ferner zu entnehmen, dass dem Matrix-Umrichter MU eine Regelanordnung R zugeordnet ist, die eingangsseitig mit Messgrößen des ersten und des zweiten Wechselspannungsnetzes N1 beziehungsweise N2 beaufschlagt ist. Zu diesem Zwecke ist in dem Phasenleiter u1 ein Stromwandler Stu1 angeordnet, dem eine Messwertverarbeitungseinrichtung Mu1i nachgeordnet ist, von der ein dem jeweiligen Strom in dem Phasenleiter u1 proportionaler Strom einem Eingang Eu1i zugeleitet wird. Die Spannung an dem Phasenleiter u1 wird mittels eines Spannungswandlers Spu1 erfasst, dem ein Messwertumsetzer Mu1u nachgeschaltet ist. Eine der Spannung an dem Phasenleiter u1 proportionale Spannung gelangt über einen Eingang Eu1u in die Regelanordnung R. Weitere, nur schematisch dargestellte Eingänge der Regelanordnung R sind dazu vorgesehen, in entsprechender Weise Strom- und Spannungsmessgrößen an den Phasenleitern v1 und w1 der Regelanordnung R zuzuführen.

Entsprechend werden auch Strom- und Spannungsmessgrößen an den Phasenleitern u2, v2 und w2 des zweiten Wechselspannungsnetzes N2 erfasst, indem über einen Stromwandler Stu2 und eine Messwertaufbereitungseinrichtung Mu2i eine Strommessgröße über einen Eingang Eu2i der Regelanordnung R zugeführt wird; die entsprechende Spannung am Phasenleiter u2 wird mittels eines Spannungswandler Spu2 mit nachgeordneter Messwertaufbereitungsanordnung Mu2u über einen weiteren Eingang Eu2u der Regelanordnung R zugeführt. Weitere nur schematisch an der Regelanordnung R angedeutete Eingänge dienen dazu, in entsprechender Weise die Strom- und Spannungsmessgrößen an den Phasenleitern v2 und w2 zu erfassen und der Regelanordnung R zur Weiterverarbeitung zuzuleiten.

Die Regelanordnung R ist ferner mit Steuerausgängen SA1 bis SAn versehen, die in nicht dargestellter Weise an die verschiedenen Steuereingänge der Submodule SM angeschlossen sind. Bei einer entsprechenden Auslegung der Regelungsanordnung R können die einzelnen Submodule SM so gesteuert werden, dass von den ersten und zweiten Umrichtereinheiten Uu1, Uv1 und Uw1 beziehungsweise Uu2, Uv2 und Uw2 zwei Wechselspannungsquellen gebildet werden, die zu einer Wechselspannung mit gewünschter Höhe und/oder Frequenz am Wechselspannungsnetz N2 führen; dabei wird mittels der Regelanordnung R dafür gesorgt, dass die in den Matrix-Umrichtern MU aus dem ersten Wechselspannungsnetz N1 einfließende Leistung gleich der in das zweite Wechselspannungsnetz N2 eingespeisten Leistung ist.

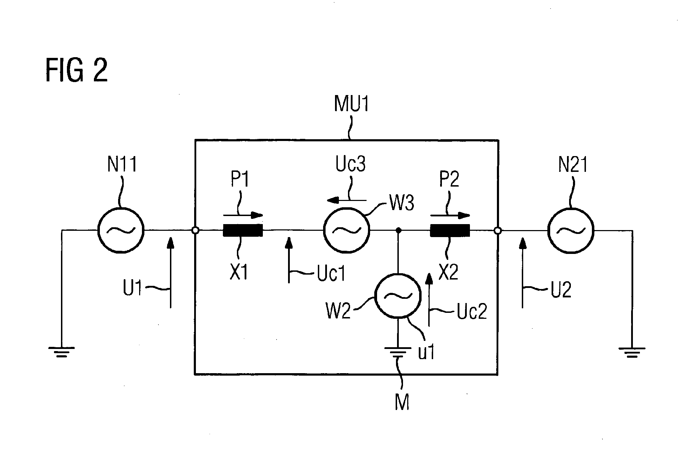

Zur weiteren Erläuterung der Wirkungsweise des erfindungsgemäßen Matrix-Umrichters dient die Figur 2, in der beispielhaft anhand einer Phase die Steuerung des Matrix-Umrichters erläutert wird. Der hier dargestellte Umrichter MU1, der beispielsweise gedanklich die beiden Umrichtereinheiten Uu1 und Uu2 nach Figur 1 enthält, liegt einerseits an einem ersten Wechselspannungsnetz N11 (beispielsweise Phasenleiter u1 nach Fig. 1), an dem eine Spannung u1 ansteht. Mit dieser Spannung U1 ist der Umrichter MU1 beaufschlagt. Eine Wechselspannungsquelle W2 des Umrichters MU1 entspricht in dem gewählten Beispiel gedanklich der ersten Umrichtereinheit Uu1 und erzeugt eine weitere Umrichter-Spannung Uc2; die Wechselspannungsquelle W2 liegt einerseits an Erdpotenzial M und ist andererseits mit einer weiteren Wechselspannungsquelle W3 verbunden, die der zweiten Umrichtereinheit Uu2 nach Fig. 1 entspricht. An dieser weiteren Wechselspannungsquelle W2 tritt eine zusätzliche Umrichterspannung Uc3 auf. Durch die hier nicht dargestellte Regelanordnung wird eine Ansteuerung der Umrichtereinheiten beziehungsweise der Wechselspannungsquellen W2 und W3 derart vorgenommen, dass die über die Drossel X1 (induktives Schaltungselement Su1) eingespeiste Leistung P1 vom Wechselspannungsnetz N11 der Leistung P2 entspricht, die über die Drossel X2 (zweites induktives Schaltungselement Su2 nach Fig. 1) an das zweite Netz N2 mit einer Spannung U2 geliefert wird. Es wird also stets dafür gesorgt, dass unter Berücksichtigung der Unterschiede zwischen der Spannung U1 und der Spannung U2 beide Leistungen P1 und P2 gleich groß sind, was sich formelmäßig in folgender Weise darstellen lässt:

$$P1 = \{U1.Uc1\sin(\delta1)\}/X1 \qquad (1)$$

$$P2 = \{U2.Uc2\sin(\delta2)\}/X2\,. \qquad (2)$$

In diesen Gleichungen (1) und (2) $\delta1$ und $\delta2$ die Phasendifferenzen an den induktiven Schaltelementen X1 und X2. Die Spannung Uc1 ist gegeben durch die Gleichung (3):

$$Uc1 = (Uc2 + Uc3)\,. \qquad (3)$$

Daraus wird klar, dass es durch die Steuerung des Leistungsflusses möglich ist, bei einer vorgegebenen Spannung U1 beziehungsweise Spannung am Phasenleiter u1 gemäß Fig. 1 durch St4euerung der Wechselspannungsquellen W2 und W3 beziehungsweise der ersten und der zweiten Umrichtereinheit Uu1 und Uu2 von Spannungshöhe, Phase und Frequenz der Spannungen Uc2 und Uc3 so einzustellen, dass im zweiten Wechselspannungsnetz N21 beziehungsweise N2 gemäß Fig. 1 die gewünschte Spannung U2 entsteht.

**Patentansprüche**

1. Matrix-Umrichter (MU), der einerseits mit einem ersten mehrphasigen Wechselspannungsnetz (N1) und andererseits mit einem zweiten mehrphasigen Wechselspannungsnetz (N2) verbunden ist,

   - mit jeweils mit dem ersten Wechselspannungsnetz (N1) verbundenen, ersten induktiven Schaltungselementen (Su1, Sv1, Sw1) und jeweils mit dem zweiten Wechselspannungsnetz (N2) verbundenen, zweiten induktiven Schaltungselementen (Su2, Sv2, Sw2),
   - mit einer Schaltmatrix (MA), die die von dem ersten Wechselspannungsnetz (N1) abgewandten Enden (Eu1, Ev1, Ew1) der ersten induktiven Schaltungselemente (Su1, Sv1, Sw1) mit den von dem zweiten Wechselspannungsnetz (N2) abgewandten Enden (Eu2, Ev2, Ew2) der zweiten induktiven Schaltungselemente (Su2, Sv2, Sw2) verbindet, wobei

     - die Schaltmatrix (MA) aus steuerbaren Umrichtereinheiten (Uu1, Uv1, Uw1; Uu2, Uv2, Uw2) besteht,

   - mit einer mit Steuereingängen der steuerbaren Umrichtereinheiten (Uu1, Uv1, Uw1; Uu2, Uv2, Uw2) verbundenen Regelanordnung (R),

     - wobei die Regelanordnung (R) mit Strom- und Spannungsmessgrößen des ersten und des zweiten Wechselspannungsnetzes (N1, N2) beaufschlagt ist, und

   - wobei zwischen die von dem ersten Wechselspannungsnetz (N1) abgewandten Enden (Eu1, Ev1, Ew1) der ersten induktiven Schaltungselemente (Su1, Sv1, Sw1) und die von dem zweiten Wechselspannungsnetz (N2) abgewandten Enden (Eu2, Ev2, Ew2) der zweiten induktiven Schaltungselemente (Su2, Sv2, Sw2) jeweils eine zweite Umrichtereinheit (Uu2, Uv2, Uw2) in einer Ausführung als steuerbare Wechselspannungsquelle geschaltet ist,

   **dadurch gekennzeichnet, dass**

   - zwischen den von dem ersten Wechselspannungsnetz (N1) abgewandten Enden (Eu1, Ev1, Ew1) der ersten induktiven Schaltungselemente (Su1, Sv1, Sw1) und Erdpotential (M) jeweils eine erste Umrichtereinheit (Uu1, Uv1, Uw1) in einer Ausführung als steuerbare Wechselspannungsquelle angeordnet ist, und
   - die Regelanordnung (R) mit Steuereingängen der ersten und der zweiten Umrichtereinheiten (Uu1, Uv1, Uw1; Uu2, Uv2, Uw2) derart verbunden ist, dass die dem Matrix-Umrichter (MU) zufließende elektrische Leistung gleich der aus dem Matrix-Umrichter (MU) abfließenden elektrischen Leistung ist.

2. Matrix-Umrichter nach Anspruch 1, **dadurch gekennzeichnet, dass**

   - die ersten und die zweiten Umrichtereinheiten (Uu1, Uv1, Uw1; Uu2, Uv2, Uw2) Multilevel-Umrichtereinheiten sind.

3. Matrix-Umrichter nach Anspruch 2, **dadurch gekennzeichnet, dass**

   - die Multilevel-Umrichtereinheiten (Uu1, Uv1, Uw1; Uu2, Uv2, Uw2) aus H-Brücken-Submodulen bestehen.

4. Matrix-Umrichter nach Anspruch 3, **dadurch gekennzeichnet, dass**

   - die Kondensatoren der H-Brücken-Submodule Speicherkondensatoren mit höchster Kapazität (Super-Caps)sind.

5. Matrix-Umrichter nach Anspruch 3, **dadurch gekennzeichnet, dass**

   - den Kondensatoren der H-Brücken-Submodulen Energiespeicher parallel geschaltet sind.

6. Matrix-Umrichter nach einem der vorangehenden Ansprüche, **dadurch gekennzeichnet, dass**

   - die induktiven Schaltungselemente (Su1, Sv1, Sw1; Su2, Sv2, Sw2) Drosseln sind.

7. Matrix-Umrichter nach einem der Ansprüche 1 bis 6, **dadurch gekennzeichnet, dass**

• die induktiven Schaltungselemente (Su1, Sv1, Sw1; Su2, Sv2, Sw2) Transformatoren sind.

8. Verfahren zum Erzeugen einer Wechselspannung in einem zweiten mehrphasigen Wechselspannungsnetz (N2) aus einer mehrphasigen Wechselspannung (N1) in einem ersten Wechselspannungsnetz mittels eines Matrix-Umrichters (MU), der aufweist

• eine Verbindung zu dem ersten Wechselspannungsnetz (N1) und dem zweiten Wechselspannungsnetz (N2),
• jeweils mit dem ersten Wechselspannungsnetz (N1) verbundene, erste induktive Schaltungselemente (Su1, Sv1, Sw1) und jeweils mit dem zweiten Wechselspannungsnetz (N2) verbundene, zweites induktive Schaltungselemente (Su2, Sv2, Sw2),
• eine Schaltmatrix (MA), die die von dem ersten Wechselspannungsnetz (N1) abgewandten Enden (Eu1, Ev1, Ew1) der ersten induktiven Schaltungselemente (Su1, Sv1, Sw1) mit den von dem zweiten Wechselspannungsnetz (N2) abgewandten Enden (Eu2, Ev2, Ew2) der zweiten induktiven Schaltungselemente (Su2, Sv2, Sw2) verbindet, wobei

• die Schaltmatrix (MA) aus steuerbaren Umrichtereinheiten (Uu1, Uv1, Uw1; Uu2, Uv2, Uw2) besteht, und

• eine mit Steuereingängen der steuerbaren Umrichtereinheiten (Uu1, Uv1, Uw1; Uu2, Uv2, Uw2) verbundene Regelanordnung (R), wobei

• die Regelanordnung (R) mit Strom- und Spannungsmessgrößen des ersten und des zweiten Wechselspannungsnetzes(N1, N2) beaufschlagt ist,

**dadurch gekennzeichnet, dass**

• bei einem Matrix-Umrichter (MU) mit mit jeweils einer zwischen den von dem ersten Wechselspannungsnetz (N1) abgewandten Enden (u1, Ev1, Ew1) der ersten induktiven Schaltungselemente (Su1, Sv1, Sw1) und Erdpotential (M) angeordneten ersten Umrichtereinheit (Uu1, Uv1, Uw1) in einer Ausführung als steuerbare Wechselspannungsquelle und jeweils einer zwischen die von dem ersten Wechselspannungsnetz (N1) abgewandten Enden (Eu1, Ev1, Ew1) der ersten induktiven Schaltungselemente (Su1, Sv1, Sw1) und die von dem zweiten Wechselspannungsnetz (N2) abgewandten Enden (u2, Ev2, Ew2) der zweiten induktiven Schaltungselemente (Su2, Sv2, Sw2) angeschlossenen zweiten Umrichtereinheit (Uu2, Uv2, Uw2) in einer Ausführung als steuerbare Wechselspannungsquelle die Umrichtereinheiten (Uu1, Uv1, Uw1; Uu2, Uv2, Uw2) mittels der Regelanordnung (R) derart gesteuert werden, dass die dem Matrix-Umrichter (MU) zufließende elektrische Leistung gleich der aus dem Matrix-Umrichter (MU) abfließenden elektrischen Leistung ist.

9. Verfahren nach Anspruch 8, **dadurch gekennzeichnet, dass**

• als erste und zweite Umrichtereinheiten (Uu1, Uv1, Uw1; Uu2, Uv2, Uw2) Multilevel-Umrichtereinheiten verwendet werden.

10. Verfahren nach Anspruch 9, **dadurch gekennzeichnet, dass**

• als Multilevel-Umrichtereinheiten (Uu1, Uv1, Uw1; Uu2, Uv2, Uw2) H-Brücken-Submodule verwendet werden.

11. Verfahren nach einem der Ansprüche 8 bis 10, **dadurch gekennzeichnet, dass**

• als induktive Schaltungselemente (Su1, Sv1, Sw1; Su2, Sv2, Sw2) Drosseln verwendet werden.

12. Verfahren nach einem der Anspruch 8 bis 10, **dadurch gekennzeichnet, dass**

• als induktive Schaltungselemente (Su1, Sv1, Sw1; Su2, Sv2, Sw2) Transformatoren verwendet werden.

## Claims

1. Matrix converter (MU), which is connected firstly to a first polyphase AC voltage grid (N1) and secondly to a second polyphase AC voltage grid (N2),

   • comprising first inductive circuit elements (Su1, Sv1, Sw1), which are each connected to the first AC voltage grid (N1), and second inductive circuit elements (Su2, Sv2, Sw3), which are each connected to the second AC voltage grid (N2),
   • comprising a switching matrix (MA), which connects those ends (Eu1, Ev1, Ew1) of the first inductive circuit elements (Su1, Sv1, Sw1) which are remote from the first AC voltage grid (N1) to those ends (Eu2, Ev2, Ew2) of the second inductive circuit elements (Su2, Sv2, Sw2) which are remote from the second AC voltage grid (N2), wherein

       • the switching matrix (MA) comprises controllable converter units (Uu1, Uv1, Uw1; Uu2, Uv2, Uw2),

   • comprising a closed-loop control arrangement (R), which is connected to control inputs of the controllable converter units (Uu1, Uv1, Uw1; Uu2, Uv2, Uw2),

       • wherein measured current and voltage values of the first and second AC voltage grids (N1, N2) are applied to the closed-loop control arrangement (R), and

   • wherein in each case one second converter unit (Uu2, Uv2, Uw2) in an embodiment as a controllable AC voltage source is connected between those ends (Eu1, Ev1, Ew1) of the first inductive circuit elements (Su1, Sv1, Sw1) which are remote from the first AC voltage grid (N1) and those ends (Eu2, Ev2, Ew2) of the second inductive circuit elements (Su2, Sv2, Sw2) which are remote from the second AC voltage grid (N2), **characterized in that**
   • in each case one first converter unit (Uu1, Uv1, Uw1) in an embodiment as a controllable AC voltage source is arranged between those ends (Eu1, Ev1, Ew1) of the first inductive circuit elements (Su1, Sv1, Sw1) which are remote from the first AC voltage grid (N1) and ground potential (M), and
   • the closed-loop control arrangement (R) is connected to control inputs of the first and second converter units (Uu1, Uv1, Uw1; Uu2, Uv2, Uw2) in such a way that the electrical power flowing to the matrix converter (MU) is equal to the electrical power flowing out of the matrix converter (MU).

2. Matrix converter according to Claim 1, **characterized in that**

   • the first and second converter units (Uu1, Uv1, Uw1; Uu2, Uv2, Uw2) are multilevel converter units.

3. Matrix converter according to Claim 2, **characterized in that**

   • the multilevel converter units (Uu1, Uv1, Uw1; Uu2, Uv2, Uw2) comprise H bridge submodules.

4. Matrix converter according to Claim 3, **characterized in that**

   • the capacitors of the H bridge submodules are storage capacitors having a very high capacitance (supercapacitors).

5. Matrix converter according to Claim 3, **characterized in that**

   • energy stores are connected in parallel with the capacitors of the H bridge submodules.

6. Matrix converter according to one of the preceding claims, **characterized in that**

   • the inductive circuit elements (Su1, Sv1, Sw1; Su2, Sv2, Sw2) are inductors.

7. Matrix converter according to one of Claims 1 to 6, **characterized in that**

   • the inductive circuit elements (Su1, Sv1, Sw1; Su2, Sv2, Sw2) are transformers.

8. Method for generating an AC voltage in a second polyphase AC voltage grid (N2) from a polyphase AC voltage (N1) in a first AC voltage grid by means of a matrix converter (MU), which has

• a connection to the first AC voltage grid (N1) and the second AC voltage grid (N2),
• first inductive circuit elements (Su1, Sv1, Sw1), which are each connected to the first AC voltage grid (N1), and second inductive circuit elements (Su2, Sv2, Sw2) which are each connected to the second AC voltage grid (N2),
• a switching matrix (MA), which connects those ends (Eu1, Ev1, Ew1) of the first inductive circuit elements (Su1, Sv1, Sw1) which are remote from the first AC voltage grid (N1) to those ends (Eu2, Ev2, Ew2) of the second inductive circuit elements (Su2, Sv2, Sw2) which are remote from the second AC voltage grid (N2), wherein

• the switching matrix (MA) comprises controllable converter units (Uu1, Uv1, Uw1; Uu2, Uv2, Uw2), and

• a closed-loop control arrangement (R), which is connected to control inputs of the controllable converter units (Uu1, Uv1, Uw1; Uu2, Uv2, Uw2), wherein

• measured current and voltage values of the first and second AC voltage grids (N1, N2) are applied to the closed-loop control arrangement (R), **characterized in that**

• in the case of a matrix converter (MU) comprising in each case one first converter unit (Uu1, Uv1, Uw1) in an embodiment as a controllable AC voltage source, which is arranged between those ends (Eu1, Ev1, Ew1) of the first inductive circuit elements (Su1, Sv1, Sw1) which are remote from the first AC voltage grid (N1) and ground potential (M), and in each case one second converter unit (Uu2, Uv2, Uw2) in an embodiment as a controllable AC voltage source, which is connected between those ends (Eu1, Ev1, Ew1) of the first inductive circuit elements (Su1, Sv1, Sw1) which are remote from the first AC voltage grid (N1) and those ends (Eu2, Ev2, Ew2) of the second inductive circuit elements (Su2, Sv2, Sw2) which are remote from the second AC voltage grid (N2), the converter units (Uu1, Uv1, Uw1; Uu2, Uv2, Uw2) are controlled by means of the closed-loop control arrangement (R) in such a way that the electrical power flowing to the matrix converter (MU) is equal to the electrical power flowing out of the matrix converter (MU).

9. Method according to Claim 8, **characterized in that**

• multilevel converter units are used as the first and second converter units (Uu1, Uv1, Uw1; Uu2, Uv2, Uw2).

10. Method according to Claim 9, **characterized in that**

• H bridge submodules are used as multilevel converter units (Uu1, Uv1, Uw1; Uu2, Uv2, Uw2).

11. Method according to one of Claims 8 to 10, **characterized in that**

• inductors are used as inductive circuit elements (Su1, Sv1, Sw1; Su2, Sv2, Sw2).

12. Method according to one of Claims 8 to 10, **characterized in that**

• transformers are used as inductive circuit elements (Su1, Sv1, Sw1; Su2, Sv2, Sw2).


**Revendications**

1. Convertisseur (MU) de matrice, qui est relié d'une part à un premier réseau (N1) polyphasé de tension alternative et d'autre part à un deuxième réseau (N2) polyphasé de tension alternative,

• comprenant respectivement des premiers éléments (Su1, Sv1, Sw1) de circuit inductifs, reliés au premier réseau (N1) de tension alternative et des deuxièmes éléments (Su2, Sv2, Sw2) inductifs reliés au deuxième réseau (N2) de tension alternative,
• comprenant une matrice (MA) de commutation, qui relie les extrémités (Eu1, Ev1, Ew1), éloignées du premier réseau (N1) de tension alternative, des premiers éléments (Su1, Sv1, Sw1) de commutation inductifs aux extrémités (Eu2, Ev2, Ew2), éloignées du deuxième réseau (N2) de tension alternative, des deuxièmes éléments (Su2, Sv2, Sw2) de commutation inductifs, dans lequel

- • la matrice (MA) de commutation est constituée d'unités (Uu1, Uv1, Uw1; Uu2, Uv2, Uw2) de convertisseur pouvant être commandées,

- • comprenant un agencement (R) de régulation, relié à des entrées de commande, des unités ((Uu1, Uv1, Uw2 ; Uu2, Uv2, Uw2) de commutateur pouvant commandées,

- • dans lequel l'agencement (R) de régulation reçoit des grandeurs de mesure de courant et de tension du premier et du deuxième réseaux (N1, N2) de tension alternative et

- • dans lequel il est monté entre les extrémités (Eu1, Ev1, Ew1), éloignées du premier réseau (N1) de la tension alternative, des éléments (Su1, Sv1, Sw1) de circuit inductifs et les extrémités (Eu2, Ev2, Ew2), éloignées du deuxième réseau (N2) de tension alternative, des deuxièmes éléments (Su2, Sv2, Sw2) de circuit inductifs, respectivement une deuxième unité (Uu2, Uv2, Uw2) de convertisseur en une réalisation sous la forme d'une source de tension alternative pouvant être commandée, **caractérisé en ce que**

- • entre les extrémités (Eu1, Ev1, Ew1), éloignées du premier réseau (N1) de tension alternative, des premiers éléments (Su1, Sv1, Sw1) de circuit inductifs et le potentiel (M) de terre est montée respectivement une première unité (Uu1, Uv1, Uw1) de convertisseur en une réalisation sous la forme d'une source de tension alternative pouvant être commandée et

- • l'agencement (R) de régulation est relié à des entrées de commande de la première et de la deuxième unités (Uu1, Uv1, Uw1 ; Uu2, Uv2, Uw2) de commutateur de manière à ce que la puissance électrique arrivant au convertisseur (MU) de matrice soit égale à la puissance électrique sortant du convertisseur (MU) de matrice.

2. Convertisseur de matrice suivant la revendication 1, **caractérisé en ce que**

- • les première et les deuxième unités (Uu1 Uv1, Uw1 ; Uu2, Uv2, Uw2) de commutateur sont des unités de commutateur à plusieurs niveaux.

3. Convertisseur de matrice suivant la revendication 2, **caractérisé en ce que**

- • les unités (Uu1, Uv1, Uw1 ; Uu2, Uv2, Uw2) de commutateur à plusieurs niveaux sont constituées de sous-modules de pont en H.

4. Convertisseur de matrice suivant la revendication 3, **caractérisé en ce que**

- • les condensateurs des sous-modules de pont en H sont des condensateurs d'accumulation ayant une très grande capacité (supercap).

5. Convertisseur de matrice suivant la revendication 3, **caractérisé en ce que**

- • les condensateurs des sous-modules de pont en H sont des accumulateurs d'énergie montés en parallèle.

6. Convertisseur de matrice suivant l'une des revendications précédentes, **caractérisé en ce que**

- • les éléments (Su1, Sv1, Sw1 ; Su2, Sv2, Sw2) de circuit inductifs sont des bobines de self.

7. Convertisseur de matrice suivant l'une des revendications 1 à 6, **caractérisé en ce que**

- • les éléments (Su1, Sv1, Sw1 ; Su2, Sv2, Sw2) de circuit inductifs sont des transformateurs.

8. Procédé de production d'une tension alternative dans un deuxième réseau (N2) polyphasé de tension alternative à partir d'une tension (N1) polyphasée alternative dans un premier réseau de tension alternative au moyen d'un convertisseur (MU) de matrice, qui a :

- • une liaison vers le premier réseau (N1) de tension alternative et vers le deuxième réseau (N2) de tension alternative,

• respectivement des premiers éléments (Su1, Sv1, Sw1) de circuit inductifs, reliés au premier réseau (N1) de tension alternative et respectivement des deuxièmes éléments (Su2, Sv2, Sw2) inductifs, reliés au deuxième réseau (N2) de tension alternative,

• une matrice (MA) de commutation, qui relie les extrémités (Eu1, Ev1, Ew1), éloignées du premier réseau (N1) de tension alternative, des premiers éléments (Su1, Sv1, Sw1) de commutation inductifs aux extrémités (Eu2, Ev2, Ew2), éloignées du deuxième réseau (N2) de tension alternative, des deuxièmes éléments (Su2, Sv2, Sw2) de commutation inductifs, dans lequel

• la matrice (MA) de commutation est constituée d'unités (Uu1, Uv1, Uw1 ; Uu2, Uv2, Uw2) de convertisseur pouvant être commandées et

• un agencement (R) de régulation, relié à des entrées de commande, des unités ((Uu1, Uv1, Uw2 ; Uu2, Uv2, Uw2) de commutateur pouvant être commandées,

• l'agencement (R) de régulation reçoit des grandeurs de mesure de courant et de tension du premier et du deuxième réseaux (N1, N2) de tension alternative,

**caractérisé en ce que**

• dans un convertisseur (MU) de matrice comprenant respectivement une première unité (u1, Uv1, Uw1) de convertisseur montée entre les extrémités (u1, Ev1, Ew1), éloignées du premier réseau (N1) de tension alternative, des premiers éléments (Su1, Sv1, Sw1) de circuit inductifs et le potentiel (M) de terre en une réalisation sous la forme d'une source de tension alternative pouvant être commandée et respectivement une deuxième unité (u2, Ev2, Ew2) de convertisseur montée en les extrémités (Eu1, Ev1, Ew1), éloignées du premier réseau (N) de tension alternative, des premiers éléments (Su1, Sv1, Sw1) de circuit inductifs et les extrémités (u2, Ev2, Ew2), éloignées du deuxième réseau (N2) de tension alternative, des deuxièmes éléments (Su2, Sv2, Sw2) de circuit inductif, les unités (Uu1, Uv1, Uw1 ; Uu2, Uv2, Uw2) de convertisseur sont commandées au moyen d'un agencement (R) de régulation de manière à ce que la puissance électrique arrivant au convertisseur (MU) soit égale à la puissance électrique sortant du convertisseur (MU) de matrice.

9. Procédé suivant la revendication 8, **caractérisé en ce que**

• l'on utilise des unités de convertisseur à niveaux multiples comme premières et deuxièmes unités (Uu1, Uv1, Uw1 ; Uu2, Uv2, Uw2) de convertisseur.

10. Procédé suivant la revendication 9, **caractérisé en ce que**

• l'on utilise des sous-modules de pont en H comme unité (Uu1, Uv1, Uw1 ; Uu2, Uv2, Uw2) de convertisseur à niveaux multiples.

11. Procédé suivant l'une des revendications 8 à 10, **caractérisé en ce que**

• l'on utilise des bobines de self comme éléments (Su1, Sv1, Sw1 ; Su2, Sv2, Sw2) de circuit inductifs.

12. Procédé suivant l'une des revendications 8 à 10, **caractérisé en ce que**

• l'on utilise des transformateurs comme éléments (Su1, Sv1, Sw1 ; Su2, Sv2, Sw2) de circuit inductifs.

## FIG 1

FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6900998 B2